# EUROPEAN PATENT APPLICATION

(11) **EP 4 793 109 A1**
(43) Date of publication of application: **19.08.2026**
(21) Application number: 25158279.7
(22) Date of filing: 17.02.2025
(51) Int. Cl.: B60R 21/207, B60R 21/231, B60R 21/2338

(54) **A SEAT MOUNTED AIRBAG ASSEMBLY, AND A VEHICLE SEAT IN WHICH SUCH ASSEMBLY IS ARRANGED**

(71) Applicant: Autoliv Development AB, 447 83 Vårgårda (SE)
(72) Inventor: Charpentier, Frederic, 76220 Gournay-en-Bray (FR); Halgrin, Julien, 76220 Gournay-en-Bray (FR); Ribillard, Damien, 76220 Gournay-en-Bray (FR); Hellot, Laurent, 76220 Gournay-en-Bray (FR); Gailhard, Carole, 76220 Gournay-en-Bray (FR); Lengaigne, Laurent, 76220 Gournay-en-Bray (FR)
(74) Representative: AWA Sweden AB

(57) **Abstract**

A seat-mounted airbag assembly (1000A; 1000B) is provided. A seat-mounted airbag assembly comprises a lateral airbag (101A; 101B) supported by a lateral side of a vehicle seat (1); a tensioning device (300); and a wrap-around restricting member (200A; 200B). The restricting member extends across the lateral airbag. The wrap-around restricting member is configured to be tensioned by the tensioning device (300) to thereby form a reaction surface to the lateral airbag upon inflation and deployment of the lateral airbag. The wrap-around restricting member (200A; 200B) has a longitudinal extension where the member along a first longitudinal portion (P1) is formed by a belt (204) and along a second portion (P2) is formed as a cord (205).

## Description

### Technical field

The present invention refers to a seat-mounted airbag assembly, and a vehicle seat in which such seat-mounted airbag assembly is arranged.

### Technical background

It is well known to use airbags in vehicles to protect seated passengers. The airbags are traditionally supported by the vehicle body's frame structure. It is also known to have airbags integrated in the seat structure. This allows the passenger to be protected no matter seat position. The seat integrated airbags may by way of example be arranged on one lateral side of the seat back, or on opposing lateral sides of the seat back. The lateral airbag is typically supplemented with a wrap-around belt that extends from an upper portion of a seatback, across the packed airbag and to a tensioning device that is arranged underneath the vehicle seat. In the event of an accident, the belt is configured to be tensioned by the belt tensioning device and form a reaction surface to the airbag as it is inflated and deployed. The reaction surface promotes the airbag to be deployed in a direction towards the seat and the seated person.

There is a general need to provide a wrap-around belt assembly where the belt easily can conform to and follow the three-dimensional shape of the vehicle seat without getting stuck. Since the belt assembly is an essential part of the overall safety arrangement of the vehicle, it is essential to also safeguard that the belt does not entangle with, and in the worst-case scenario gets pinched by other features that are part of the vehicle seat.

### Summary

It is an object of the present invention to provide a wrap-around belt assembly where the belt being part thereof easily can conform to and follow the three-dimensional shape of the vehicle seat.

The solution should strive to avoid that the belt entangles with other features in the vehicle seat and in the worst-case scenario gets pinched.

These and other objects that will be apparent from the following summary and description are achieved by a seat-mounted airbag assembly comprising: a lateral airbag supported by a lateral side of a vehicle seat; a tensioning device; a wrap-around restricting member extending across the lateral airbag, wherein the wrap-around restricting member is configured to be tensioned by the tensioning device to thereby form a reaction surface to the lateral airbag upon inflation and deployment of the lateral airbag; and wherein the wrap-around restricting member has a longitudinal extension where the member along a first longitudinal portion is formed by a belt and along a second portion is formed as a cord.

The term *"belt"* should in the context of the invention be understood as a long, slender band having a rectangular or substantially rectangular cross section. The belt may by way of example have a homogenous, extruded cross section or be a woven structure.

The term *"cord"* should in the context of the invention be understood as a long, slender rope, string or even a chain. The cross section may by way of example be circular or substantially circular. The cord may have a homogenous cross section or be made up of several strands that are twisted or woven together.

By dividing the wrap-around restricting member along its longitudinal extension into two or more portions with different geometrical cross-sections, different technical effects may be provided for as seen along its longitudinal extension. The belt, which as such has a substantially rectangular cross section with two opposing, generally flat surfaces, may form a relatively wide and large reaction surface to the airbag upon inflation and deployment thereof. Further, the cord, which as such has a circular or substantially circular cross section, will more easily conform to and accommodate the different spatial, three-dimensional extensions that apply as seen along the lateral side of the vehicle seat with the seat back connecting to the seat pan, and not at least when connecting the restricting member to the tensioning device that typically is arranged centrally underneath the vehicle seat.

It is to be understood that the wrap-around restricting member may be divided in more than two portions, where the portions have different geometrical cross-sections.

The first portion of the wrap-around restricting member may be formed as a belt that extends across the lateral airbag. The belt extends across the exterior side of the lateral airbag which is typically rolled and or folded.

The second portion of the wrap-around restricting member being formed as a cord may connect to the tensioning device.

The tensioning device may comprise an actuator and a pulling arrangement. The actuator may be a pyrotechnically operated piston which in one end is connected to the pulling arrangement.

The seat-mounted airbag assembly may further comprise a guide bracket that is connected to the vehicle seat, and the second portion of the wrap-around restricting member being formed as a cord may engage said guide bracket. The guide bracket facilitates a control of the longitudinal extension of the wrap-around restricting member along the lateral side of the vehicle seat and especially in the interface between the seat back and the seat pan where the two seat parts form a distinct angle in view of each other.

This contributes to the restricting member having a controlled extension along the lateral side of the vehicle seat. This reduces the risk of the restricting member being pinched or being entangled with other features in the vehicle seat.

The first longitudinal portion of the wrap-around restricting member connects to the second longitudinal portion of the wrap-around restricting member in a joint, said joint being displaced in view of the guide bracket. By the displacement, the joint is prevented from coming in contact with the guide bracket and hence interfering with the engagement between the cord and the guide bracket.

The belt and the cord may be joined together by way of sewing, adhesive, welding or riveting, or a combination thereof.

The guide bracket may be spring biased and be arranged to engage and maintain the wrap-around restricting member in a pre-tensioned condition during normal operation of the vehicle seat; and the guide bracket may be configured to release its engagement with the wrap-around restricting member upon actuation of the tensioning device.

By the guide bracket being spring biased, the guide bracket will engage and maintain the wrap-around restricting member in a pre-tensioned condition during normal operation of the vehicle seat. The normal operation of the vehicle seat includes setting the inclination of the seat back in view of the seat pan at the seated passenger's choice.

The restricting member will thereby always have a controlled extension along the lateral side of the vehicle seat. This reduces the risk of the restricting member being pinched or being entangled with other features in the vehicle seat. Also, the pre-tensioning reduces the risk of any noise being generated by the restricting member coming in un-controlled contact with the seat frame which as such contains metal.

The guide bracket may be spring biased by a torsion spring. A torsion spring is as such well known to the skilled person. It is a mechanical spring that works by exerting a torque or a twisting force when it is twisted along its axis. The spring is made of wire that is wound in a spiral shape, with the ends of the wire attached to a stationary point on one end and a rotating point on the other end. The torsion spring may comprise one leg that is attached to the guide bracket, and one leg that is attached to a trimming of the vehicle seat extending along a lateral side of the seat pan. It is to be understood that the trimming may be replaced by any other stationary part of the vehicle seat.

The thus spring biased guide bracket may be configured to maintain the wrap-around restricting member in a substantially non-slacked condition during normal operation of the vehicle seat. A non-slacked condition should be understood as a condition where non-supported portions of the restricting member are prevented from shaking/swinging during normal operation of the vehicle seat.

The guide bracket may be pivotably connected to the vehicle seat. The pivot axis is preferably arranged to extend in parallel with a rear seat pan cross member of the vehicle seat. The rear seat pan cross member is a structural part of a vehicle seat well known to the skilled person in the art, which cross member extends between two opposing lateral side members of the seat pan and pivotably connects the seat back to the seat pan.

A pivot axis of the guide bracket may coincide with a pivot axis of a rear seat pan cross member that pivotably connects a seat back and a seat pan of the vehicle seat. A pivoting of the seat back will thereby automatically result in a tensioning/release of the guide bracket.

The guide bracket may comprise a groove and the wrap-around restricting member may be configured to be received in said groove by means of a snap-fit.

The groove may be provided with an under-cut cross sectional profile. The under-cut cross-sectional profile may be provided with a recess and a mouth, where the mouth has a width that is slightly smaller than a width of the recess, and where the width of the mouth is slightly smaller than the width of the wrap-around restricting member. The restriction member can thereby be received and maintained in the groove, but be pulled out upon tensioning the restriction member by the tensioning device. The restriction member will be forced to pop-out from the groove when tensioned by the tensioning device to a degree where the pivoting force that is indirectly applied by the tensioning device to the pre-tensioning bracket exceeds the inherent pre-tensioning force of the guide bracket.

The mouth of the groove is preferably arranged to be oriented upwardly towards a top surface of the vehicle seat's seat pan.

The groove may be eccentrically arranged in view of the pivot axis of the guide bracket. Thereby a lever is formed that contributes to and strengthens the pre-tensioning of the restricting member.

The groove may have a straight-linear extension on the guide bracket. A straight-linear extension has shown to be efficient when releasing the engagement between the groove and the wrap-around restricting member. The skilled person realizes that the straight-linear extension must not be fully straight-linear but can be replaced by a portion having a substantially larger radius than the rear seat pan cross member of the vehicle seat.

The actuation of the tensioning device may be configured to be coordinated with an inflation of the lateral airbag.

Accordingly, in the event an accident should be detected by one or more sensors of the vehicle and where the ECU (Electrical Control Unit) of the vehicle determines that the accident could be mitigated by the associated lateral airbag, the airbag is inflated while also the tensioning device is activated to tension the wrap-around restriction member to thereby form a reaction surface to the airbag as it is inflated and deployed.

According toa another aspect, a vehicle seat is provided in which a first seat-mounted airbag assembly according to any of claims 1-11 is arranged on a first lateral side of the vehicle seat, and a second seat-mounted airbag assembly according to any of claims 1-11 is arranged on a second lateral side of the vehicle seat.

The first and the second seat-mounted airbag assemblies may have the same design and functionality. The features and advantages discussed above in view of the first seat-mounted airbag assembly are equally and directly applicable to the second seat-mounted airbag assembly. Hence, for the sake of efficiency and to avoid undue repetition, reference is made to the sections above.

The first and the second seat-mounted airbag assemblies are preferably arranged on opposite lateral sides of the vehicle seat to thereby provide a protection to the seated passenger from two opposite sides, one from the near side (closest to the door) and one from the far side (towards the longitudinal centreline of the vehicle). At least one of the two lateral airbags may be designed to deploy to form a frontal protection to thereby protect the chest portion and also provide a facial protection. The first and the second lateral airbags may be symmetric.

The wrap-around restricting member of the first seat-mounted airbag assembly and the wrap-around restricting member of the second seat-mounted airbag assembly may connect to a common tensioning device.

The common tensioning device may be arranged centrally on the lower side of the seat pan or underneath the vehicle seat. By being centrally arranged, the tensioning of the first and second wrap-around restricting members will be substantially uniform.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The invention will be described in more detail with reference to the appended schematic drawings, which show examples of a presently preferred embodiment of the invention.
Fig. 1 is a schematic overview of one embodiment of a vehicle seat with two seat-mounted airbag assemblies, each comprising a lateral airbag arranged in the seat back.
Fig. 2 is a schematic front view of one embodiment of a vehicle seat with two seat-mounted airbag assemblies where the two airbags have been deployed.
Fig. 3 is a schematic side view of a vehicle seat with a seat-mounted airbag assembly where the airbag has been deployed.
Fig. 4 is a schematic overview of a seat-mounted airbag assembly according to the invention.
Fig. 5 discloses highly schematically an embodiment of a joint between two joined belt portions.
Fig. 6 is a schematic view of one embodiment of a guiding bracket.
Fig. 7A discloses highly schematically the condition of the seat mounted airbag assembly during normal operation of the vehicle seat.
Fig. 7B discloses highly schematically the engagement between the wrap-around restricting member and the guide bracket during normal operation of the vehicle seat.
Fig. 7C discloses highly schematically the engagement between the wrap-around restricting member and the guide bracket during actuation of the tensioning device.
Fig. 7D discloses highly schematically the seat mounted airbag assembly when the wrap-around restricting member has released its engagement with the guide bracket as a result of the actuation of the tensioning device.
Fig. 7E discloses highly schematically a condition when the engagement between the wrap-around restricting member and the guide bracket is fully released.

### Detailed description

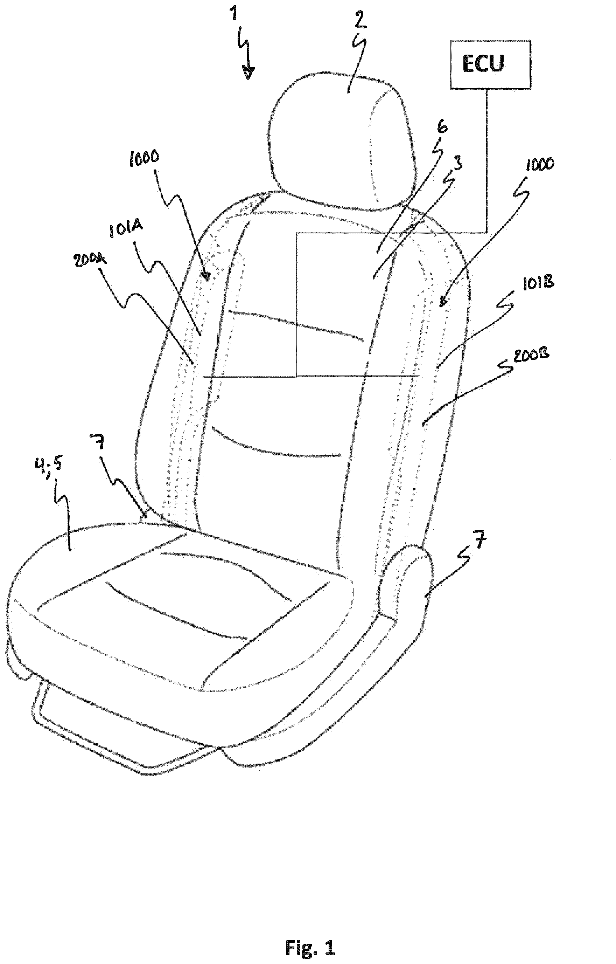

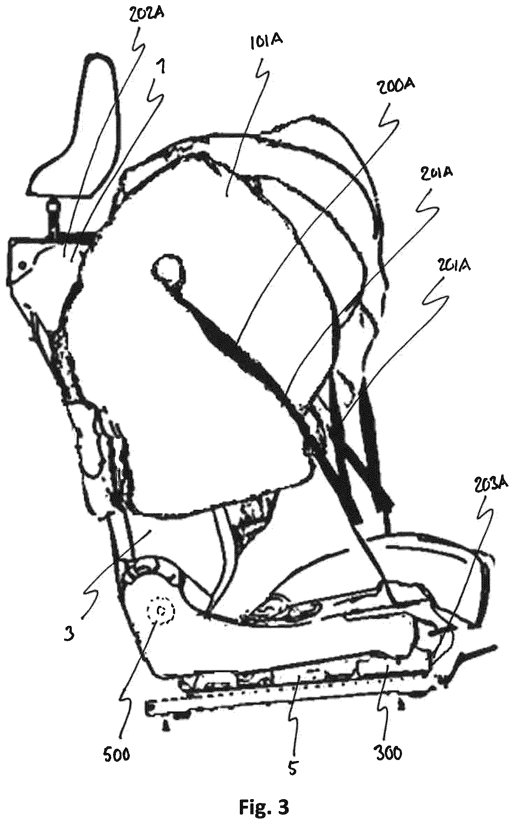

Starting with Fig. 1, one embodiment of a vehicle seat 1 with two seat-mounted airbag assemblies 1000 with a first and a second lateral airbag 101A; 101B is schematically disclosed. The vehicle seat 1 comprises a head rest 2, a seat back 3 and a seat cushion 4 supported by a seat pan 5. A trimming 7 extends along the opposing lateral sides of the seat cushion 4. The seat pan 5 is arranged inside the vehicle seat 1 below the seat cushion 4 and is hence not visible in Fig. 1 but can be seen in Fig. 3. Each lateral side of the seat back 3 comprises an airbag 101A; 101B. A wrap-around restricting member 200A, 200B extends along an outer surface of each lateral airbag 101A; 101B. As will be described below, the wrap-around restricting member 200A, 200B comprises at least one longitudinal member that extends from an upper end of the seat back 3, along the outer lateral side of the seat back 3, along the seat pan 5 and down to a tensioning device 300 that is arranged underneath the vehicle seat 1. The tensioning device 300 is hidden underneath the vehicle seat 1 but can be seen in Fig. 3.

The airbags 101A; 101B and wrap-around restricting members 200A, 200B are arranged inside an upholstery 6. The upholstery 6 is configured to rupture as the airbags 101A; 101B are inflated and deployed.

Each airbag 101A; 101B is connected to an inflator (not illustrated) which in turn is connected to an Electrical Control Unit (ECU). This is all well known to the skilled person and not further discussed.

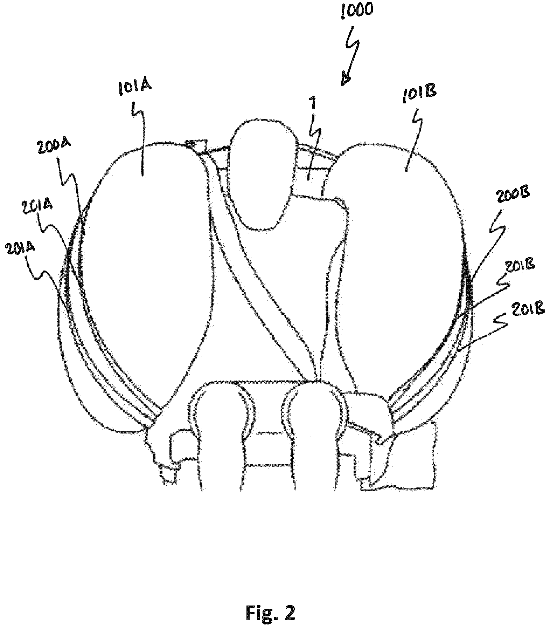

Turning to Fig. 2, the seat-mounted airbag assemblies 1000 are disclosed in a condition where the two lateral airbags 101A; 101B have been inflated and fully deployed. The two airbags 101A; 101B are disclosed as being mirrored, i.e., having the same design on both sides of the vehicle seat 1. The skilled person realizes that the airbags 101A; 101B may be designed in a number of different ways depending on which parts of the body of the seated passenger they are intended to protect. As a non-limiting example, the airbags 101A; 101B may be designed to provide not only a sidewards protection, but also a frontal protection. Also, it is to be understood that the two airbags 101A; 101B may have different designs. It is further to be understood that one of the airbags 101A; 101B may be omitted. The seat-mounted airbag assembly 1000 may accordingly comprise one lateral airbag 101A; 101B only.

The first lateral airbag 101A is associated with a first wrap-around restricting member 200A and the second lateral airbag 101B is associated with a second wrap-around restricting member 200B. The at least one longitudinal member 201A, 201B of each wrap-around restricting member 200A, 200B is configured to be tensioned and form a reaction surface to its associated airbag 101A; 101B when the airbag is inflated and deployed.

As can be seen in Fig. 2, each wrap-around restricting member 200A, 200B may comprise more than one longitudinal member 201A, 201B. Fig. 2 discloses an embodiment where each wrap-around restricting member 200A, 200B comprises two longitudinal members 201A; 201B that run side by side. The wrap-around restricting members 200A, 200B connect to one and the same tensioning device (omitted in Fig. 2). It is to be understood that each wrap-around restricting member 200A, 200B may connect to its own tensioning device.

Now turning to Fig. 3, a side view of a vehicle seat 1 is disclosed. The vehicle seat 1 is disclosed in a condition where the lateral airbags have been inflated and fully deployed. Due to the side view, only one airbag 101A and one wrap-around belt restricting member 200A is shown. A corresponding arrangement may be arranged on the opposite lateral side of the vehicle seat 1. The arrangement on the opposite side may have the same design and functionality, whereby only one of the two is discussed below.

The trimming 7 on the vehicle seat 1 (see Fig. 1) has been removed to better illustrate the seat pan 5 and the tensioning device 300.

The seat back 3 connects to the seat pan 5 via a rear seat pan cross member 500 that extends between two opposing lateral side members of the seat pan 5 and pivotably connects the seat back 3 to the seat pan 5.

The wrap-around belt restricting member 200A comprises a longitudinal member 201A having an upper end 202A that is fixedly connected to a top portion of the seat back 3, and a lower end 203A that is fixedly connected to the tensioning device 300 that is arranged underneath the vehicle seat 1. As given above, the wrap-around belt restricting member 200A may comprise more than one longitudinal member 201A. Fig. 3 discloses two longitudinal members 201A that merge into one belt that connects to the tensioning device 300. Only one longitudinal member 201A will be described in detail below. It is to be stressed that the wrap-around belt restricting member may comprise one longitudinal member only or more than two longitudinal members.

The longitudinal member 201A extends along an exterior side of the inflated airbag 101A. The longitudinal member 201A is disclosed as having a substantially flat cross section along its contact surface with the airbag 101A. The longitudinal member 201A forms a reaction surface to the associated airbag 101A during inflation and deployment of the airbag 101A. The longitudinal member 201A may be seen as an external tether that forces the airbag 101A to conform to the body of the seated passenger.

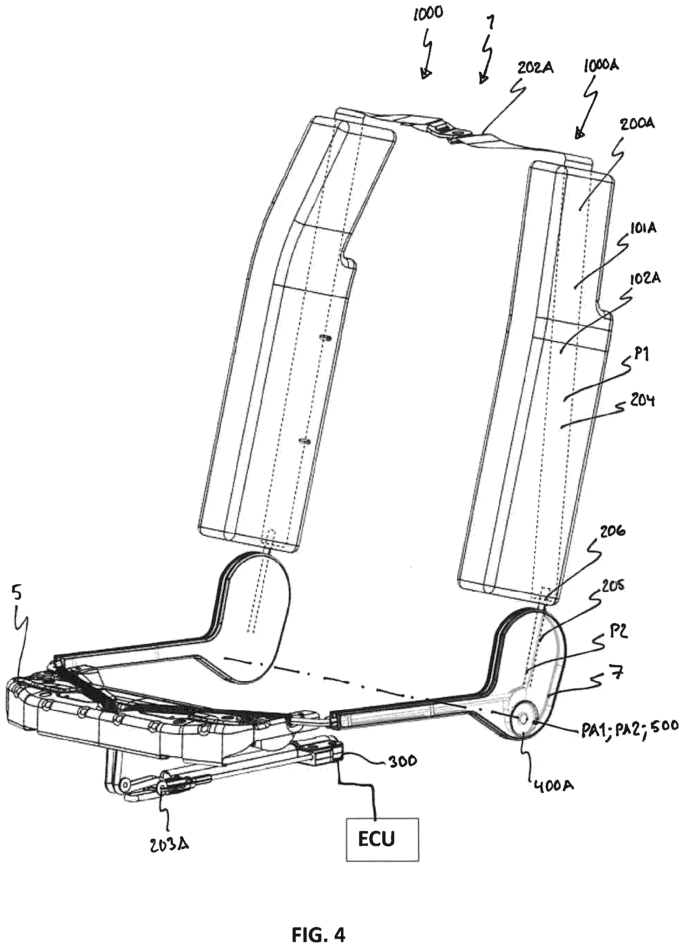

Now turning to Fig. 4, one embodiment of the seat-mounted airbag assembly 1000 of the invention is disclosed as mounted to a vehicle seat 1. One assembly 1000A, 1000B is disclosed to extend along each lateral side of the vehicle seat. Typical features of the vehicle seat 1, all of them well known to the skilled person, such as the seat back, the upholstery, cushioning and the spring structure have been removed to facilitate the understanding. Also, the rear seat pan cross member 500, best seen in Fig. 3, that pivotably connects the seat back with the seat pan is omitted although its pivot axis PA1 is illustrated. Since the seat-mounted airbag assemblies 1000A, 1000B on the two lateral sides of the vehicle seat are identical, only one assembly 1000A will be discussed in detail in the following unless nothing else is explicitly given.

The seat-mounted airbag assembly 1000A is disclosed as comprising a lateral airbag 101A that is supported by a lateral side of the vehicle seat 1. The airbag 101A is disclosed as being contained in a casing 102A. The casing 102A comprises non-disclosed rupture lines to allow the airbag 101A to be deployed upon inflation. The airbag 101A may be stored in the casing 102A in a rolled and/or folded condition. The casing can be omitted.

The tensioning device 300 is arranged at the seat pan 5. The tensioning device 300 is disclosed as being arranged underneath the vehicle seat 1 and may be supported either by the seat pan 5 or by the floor of the vehicle.

A wrap-around restricting member 200A in the form of a longitudinal member 201A extends along the lateral airbag 101A and has an upper portion 202A that connects to the seat back of the vehicle seat 1 and a lower portion 203A that connects to the tensioning device 300. The wrap-around restricting member 200A is, as is discussed above with reference to Figs. 1-3, configured to be tensioned by the tensioning device 300 to thereby form a reaction surface to the lateral airbag 101A upon inflation and deployment of the airbag. The wrap-around restricting member 200A extends along an exterior side of the airbag 101A inside the casing 102A and continues all the way to the tensioning device 300.

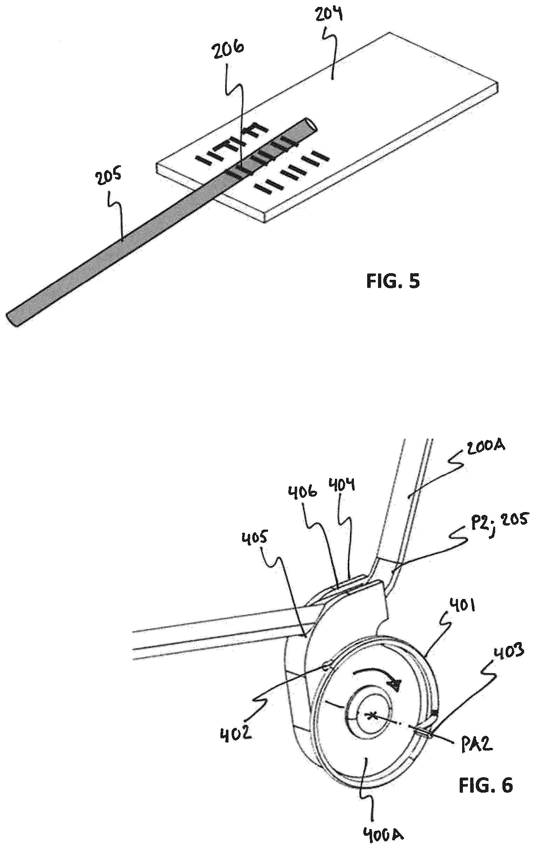

The assembly 1000A differs from prior art at least in that the wrap-around restricting member 200A along its longitudinal extension is divided into a first longitudinal portion P1 and a second longitudinal portion P2. The first longitudinal portion P1 is formed by a belt 204 and the second longitudinal portion P2 is formed as a cord 205. The first portion P1 being formed as a belt 204 extends across the lateral airbag 101A. The second portion P2 being formed as a cord 205 connects to the tensioning device 300. The belt 204 and the cord 205 are joined together in a joint 206. The belt 204 and the cord 205 may be joined together by way of example by sewing, adhesive, welding or riveting, or a combination thereof. Fig. 5 discloses one, non-limiting example of such joint 206 between a belt 204 and a cord 205.

By dividing the wrap-around restricting member along its longitudinal extension into two or more portions with different geometrical cross-sections, different technical effects may be provided for as seen along its longitudinal extension. The belt 204, which as such has a substantially rectangular cross section with two opposing, generally flat surfaces, may form a relatively wide and large reaction surface to the airbag 101A upon inflation and deployment thereof. Further, the cord 205, which as such has a circular or substantially circular cross section will more easily conform to and accommodate the different spatial orientations that apply along the lateral side of the vehicle seat as seen along the seat back and the seat pan respectively, and not at least when connecting the wrap-around restricting member 200A to the tensioning device 300 that typically is arranged underneath the vehicle seat.

It is to be understood that the wrap-around restricting member may be divided in two or more portions, where the portions have different geometrical cross-sections.

Now turning to Fig. 4 anew. The seat-mounted airbag assembly 1000A further differs from prior art in that it comprises a guide bracket 400A that is connected to the vehicle seat 1. The guide bracket 400A is arranged at the interface between the rear end of the seat pan 5 and the lower end of the seat back. The second portion P2 of the wrap-around restricting member 200A, i.e., the portion being formed by a cord 205 engages said guide bracket 400A. The joint 206 between the first portion P1 and the second portion P2 is arranged in such position along the wrap-around restricting member 200A that the joint 206 is displaced in view of the guide bracket 400A. Thereby, the joint 206 is prevented from coming into contact with the guide bracket 400A. Further, the guide bracket 400A will only be in contact with the second portion P2, being the cord.

Now turning to Figs. 4 and 6, the guide bracket 400A will be discussed. The guide bracket 400A is pivotably arranged to the vehicle seat 1 around a pivot axis PA2. The pivot axis PA2 of the guide bracket 400A is disclosed to coincide with the pivot axis PA1 of the rear seat pan cross member 500 (only its pivot axis is disclosed) that pivotably connects the seat back with the seat pan 5. The skilled person realizes that other positions along the lateral side of the vehicle seat 1 are possible. No matter position, it is preferred that the pivot axis PA2 of the guide bracket 400A is arranged to extend in parallel with the rear seat pan cross member 500 of the vehicle seat 1.

The guide bracket 400A, best seen in Fig. 6, is spring biased by a torsion spring 401. The torsion spring 401 is disclosed as comprising one leg 402 that is attached to the pre-tensioning bracket 400 and one end 403 that is attached to the trimming 7, see Fig. 4. Since the guide bracket 400A in turn is attached to the rear seat pan cross member 500 of the vehicle seat, a pivoting of the seat back will thereby automatically result in a tensioning/release of the guide bracket 400A. The guide bracket 400A is biased around its pivot axis PA2 in a direction towards the seat back, see arrow in Fig. 6.

The guide bracket 400A comprises a groove 404 that extends along a peripheral edge portion of the guide bracket. The second portion P2 portion of the wrap-around restricting member 200A, i.e. the cord 205, is received in said groove 404 by means of a snap-fit. The snap-fit is provided for by the groove 404 being provided with an under-cut cross sectional profile. The cross-sectional profile is provided with a recess 405 and a mouth 406, where the mouth has a width that is slightly smaller than a width of the recess, and where the width of the mouth is slightly smaller than the width of the wrap-around cord 205. The wrap-around restriction member 200A can thereby be received and maintained in the groove 404 but be pulled out upon tensioning of the wrap-around restriction member 200A by the tensioning device 300.

The guide bracket 400A is mounted to the vehicle seat 1 so that the mouth 406 of the groove 404 is oriented upwardly towards a top surface of the seat pan 5. The groove 404 is eccentrically arranged in view of the pivot axis PA2 of the guide bracket 400A. The groove 404 is disclosed as having a straight-linear extension on the guide bracket 400A. The skilled person realizes that the straight-linear extension must not be fully straight-linear but can be replaced by a portion having a substantially larger radius than the rear seat pan cross member 500.

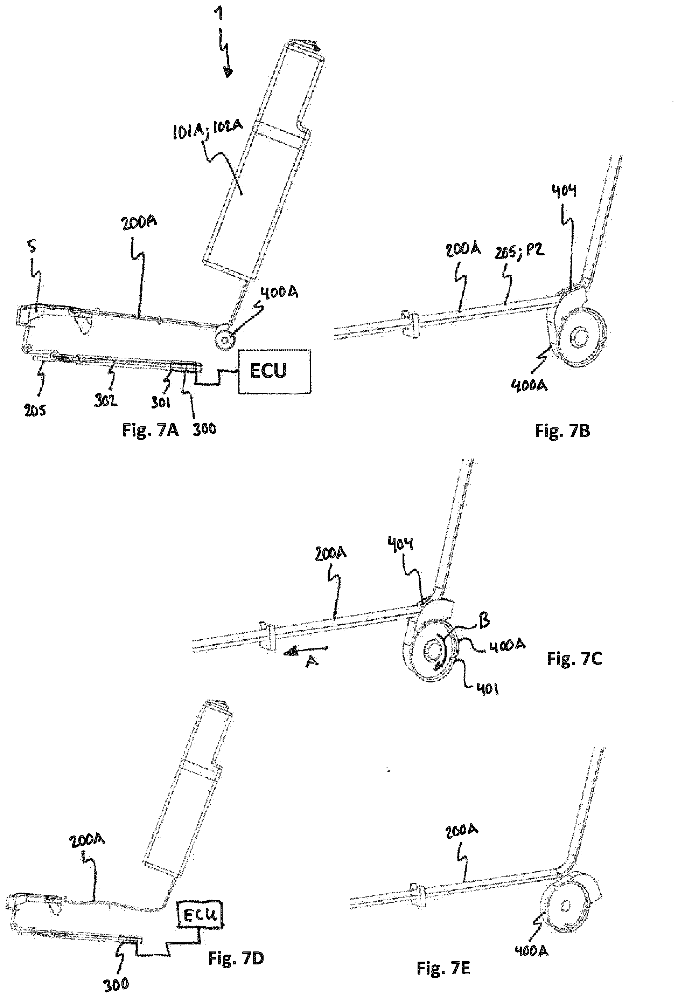

In the following, the operation of the seat-mounted airbag assembly 1000A will be discussed with reference to Figs. 7A-7E. Since the seat-mounted airbag assemblies on the two lateral sides of the vehicle seat 1 are identical, only one assembly 1000A will be discussed in the following.

Starting with Fig. 7A and Fig. 7B, the normal operation of the vehicle seat 1 is disclosed. The guide bracket 400A engages and maintains the wrap-around restricting member 200A in a pre-tensioned condition. As mentioned above, the wrap-around restricting member 200A extends from an upper end of the seat back, along an exterior side of the lateral airbag 101A that is disclosed as being contained in a casing 102A. The restricting member 200A extends inside the casing 102A and is thereby not illustrated along its full extension. A portion of the restricting member 200A engages the groove 404 of the guide bracket 400A and continues along a lateral side of the seat pan 5 where it engages the tensioning device 300 that is arranged underneath the vehicle seat 1. Accordingly, the wrap-around restricting member 200A interacts with the spring biased guide bracket 400A which engages and maintains the wrap-around restricting member 200A in a pre-tensioned condition during normal operation of the vehicle seat 1. The guide bracket 400A maintains the wrap-around restricting member 400A in a substantially non-slacked condition during normal operation of the vehicle seat. The normal operation of the vehicle seat includes setting the inclination of the seat back in view of the seat pan at the seated passenger's choice. By maintaining the wrap-around restricting member in a pre-tensioned condition, the restricting member will always have a controlled extension along the lateral side of the vehicle seat. This reduces the risk of the restricting member being pinched or being entangled with other features in the vehicle seat. Also, the pre-tensioning reduces the risk of any noise being generated by the restricting member coming on contact with the seat frame which as such contains metal.

The tensioning device 300 comprises an actuator 301 and a pulling arrangement 302. The actuator 301 may be a pyrotechnically operated piston (arranged inside the actuator) which in one end is connected to the pulling arrangement 302. The pulling arrangement 302 is in turn connected to the second portion P2, i.e., the cord 205 of the wrap-around restricting member 200A.

The tensioning device 300 is operatively connected to the ECU and is configured to be activated upon a detected accident that is determined to be able to be mitigated by the seat-mounted airbag assembly 1000.

Now turning to Figs. 7C. The tensioning device (not shown) has been activated and is pulling the wrap-around restricting member 200A, see arrow A. The tensioning of the wrap-around restricting member 200A causes the same to release its engagement with the groove 404 that extends along an upper peripheral edge portion of the guide bracket 400A. Since the guide bracket 400A is biased towards the seat back, see arrow B, the releasing of the engagement between the wrap-around restricting member 200A and the guide bracket 400A will be assisted and the wrap-around restricting member 200A will pop out from the groove 404, see Fig. 7E. The wrap-around restriction member 200A will be forced to pop-out from the groove 404 when tensioned by the tensioning device 300 to a degree where the pivoting force that is applied by the tensioning device to the guide bracket 400A exceeds the pre-tensioning force of the guide bracket provided by the torsion spring 401.

Now turning to Figs. 7D. The engagement between the wrap-around restricting member 200A and the guide bracket 400A is fully released and the wrap-around restricting member 200A is disclosed as being provided with a slack. It is to be stressed that the slack is temporary. The actuation of the tensioning device 300 is configured to be coordinated with an inflation of the lateral airbag. Accordingly, in the event an accident should be detected by one or more sensors of the vehicle and where the ECU (Electrical Control Unit) of the vehicle determines that the accident could be mitigated by the lateral airbag, the airbag is inflated while also the tensioning device 300 is activated to tension the wrap-around restriction member 200A to thereby form a reaction surface to the airbag as it is inflated and deployed. This means that the slack of the wrap-around restricting member 200A will be removed as the airbag is inflated and deployed. The inflation and deployment of the airbag is not illustrated in Fig. 7D, however, turning to Figs. 2 and 3, the full assembly is disclosed with two inflated and fully deployed lateral airbags and where the airbags act against the wrap-around restricting members which act as reaction surfaces for the airbags.

Accordingly, and in brief summary of the invention, the wrap-around restricting member is divided into two portions, the first portion being a belt and the second portion being a cord. A guide bracket engages the cord. By dividing the wrap-around restricting member along its longitudinal extension into at least two portions with different geometrical cross-sections, different technical effects may be provided for as seen along its longitudinal extension. The belt, which as such has a substantially rectangular cross section with two opposing, generally flat surfaces, will form a relatively wide and large reaction surface to the airbag upon inflation and deployment thereof. Further, the cord, which as such has a circular or substantially circular cross section, will easily conform to and accommodate the different spatial orientations that applies along the lateral side of the vehicle seat as seen along the seat back and the seat pan and not at least when connecting the wrap-around restricting member to the tensioning device that typically is arranged centrally underneath the vehicle seat. The first longitudinal portion of the wrap-around restricting member connects to the second longitudinal portion of the wrap-around restricting member in a joint. The joint is displaced in view of the guide bracket to not come in contact with the same. The joint may be arranged along a portion of the wrap-around restricting member that extends from a lower end of the lateral airbag to a position adjacent, but still displaced in view of, the guide bracket. The joint may accordingly be arranged in abutment with the packed and rolled non-inflated airbag or with the inflated airbag, but should not come in contact with the guide bracket. The joint should be positioned along the longitudinal extension of the wrap-around restricting member so that there is no risk of the joint coming into contact with the guide bracket during operation of the vehicle seat. To provide as large reaction surface as possible to the lateral airbag upon inflation and deployment, it is preferred that the joint is arranged in position along the longitudinal extension of the wrap-around restricting member that extends below the lower most edge of the lateral airbag as seen in its inflated condition.

## Claims

1. A seat-mounted airbag assembly (1000A; 1000B) comprising:
a lateral airbag (101A; 101B) supported by a lateral side of a vehicle seat (1);
a tensioning device (300);
a wrap-around restricting member (200A; 200B) extending across the lateral airbag, wherein the wrap-around restricting member (200A; 200B) is configured to be tensioned by the tensioning device (300) to thereby form a reaction surface to the lateral airbag (101A, 101B) upon inflation and deployment of the lateral airbag; and
wherein the wrap-around restricting member (200A; 200B) has a longitudinal extension where the member along a first longitudinal portion (P1) is formed by a belt (204) and along a second portion (P2) is formed as a cord (205).

2. The seat-mounted airbag assembly according to claim 1, wherein the first portion (P1) of the wrap-around restricting member (200A; 200B) being formed as a belt (204) extends across the lateral airbag (101A; 101B).

3. The seat-mounted airbag assembly according to any of claims 1 or 2, wherein the second portion (P2) of the wrap-around restricting member (200A; 200B) being formed as a cord (205) connects to the tensioning device (300).

4. The seat-mounted airbag assembly according to any of the preceding claims, further comprising a guide bracket (400A; 400B) that is connected to the vehicle seat, and wherein the second portion (P2) of the wrap-around restricting member (200A; 200B) being formed as a cord (205) engages said guide bracket.

5. The seat-mounted airbag assembly according to claim 4, wherein the first longitudinal portion (P1) of the wrap-around restricting member (200A; 200B) connects to the second longitudinal portion (P2) of the wrap-around restricting member (200A; 200B) in a joint (206), said joint being displaced in view of the guide bracket (400A; 400B).

6. The seat-mounted airbag assembly according to any of the preceding claims,
wherein the belt (204) and the cord (205) are joined together by way of sewing, adhesive, welding or riveting, or a combination thereof.

7. The seat-mounted airbag assembly according to any of claims 4-6, wherein the guide bracket (400A, 400B) is spring biased and is arranged to engage and maintain the wrap-around restricting member (200A; 200B) in a pre-tensioned condition during normal operation of the vehicle seat (1); and
wherein the guide bracket (400A; 400B) is configured to release its engagement with the wrap-around restricting member (200A; 200B) upon actuation of the tensioning device (300).

8. The seat-mounted airbag assembly according to any of claims 4 to 7, wherein the guide bracket (400A; 400B) is pivotably connected to the vehicle seat (1).

9. The seat-mounted airbag assembly according to claim 8, wherein a pivot axis (PA2) of the guide bracket (400A; 400B) coincides with a pivot axis (PA1) of a rear seat pan cross member (500) that pivotably connects a seat back (3) and a seat pan (5) of the vehicle seat (1).

10. The seat-mounted airbag assembly according to any of claims 4-9, wherein the guide bracket (400A; 400B) comprises a groove (404) and wherein the wrap-around restricting member (200A; 200B) is configured to be received in said groove by means of a snap-fit.

11. The seat-mounted airbag assembly according to any of the preceding claims,
wherein the actuation of the tensioning device (300) is configured to be coordinated with an inflation of the lateral airbag (101A; 101B).

12. A vehicle seat, wherein a first seat-mounted airbag assembly (1000A) according to any of claims 1-11 is arranged on a first lateral side of the vehicle seat (1), and a second seat-mounted airbag assembly (1000B) according to any of claims 1-11 is arranged on a second lateral side of the vehicle seat (1).

13. The vehicle seat according to claim 12, wherein the wrap-around restricting member (200A) of the first seat-mounted airbag assembly (1000A) and the wrap-around restricting member (200B) of the second seat-mounted airbag assembly (1000B) connect to a common tensioning device (300).

## Amended claims

### Amended claims in accordance with Rule 137(2) EPC.

1. A seat-mounted airbag assembly (1000A; 1000B) comprising:
a lateral airbag (101A; 101B) supported by a lateral side of a vehicle seat (1);
a tensioning device (300);
a wrap-around restricting member (200A; 200B) extending across the lateral airbag, wherein the wrap-around restricting member (200A; 200B) is configured to be tensioned by the tensioning device (300) to thereby form a reaction surface to the lateral airbag (101A, 101B) upon inflation and deployment of the lateral airbag, and wherein the wrap-around restricting member (200A; 200B) has a longitudinal extension where the member along a first longitudinal portion (P1) is formed by a belt (204) and along a second portion (P2) is formed as a cord (205); and
a guide bracket (400A; 400B) that is connected to the vehicle seat;
wherein the second portion (P2) of the wrap-around restricting member (200A; 200B) being formed as a cord (205) engages said guide bracket; the assembly being **characterized in that**
the guide bracket (400A, 400B) is spring biased and is arranged to engage and maintain the wrap-around restricting member (200A; 200B) in a pre-tensioned condition during normal operation of the vehicle seat (1); and
**in that** the guide bracket (400A; 400B) is configured to release its engagement with the wrap-around restricting member (200A; 200B) upon actuation of the tensioning device (300).

2. The seat-mounted airbag assembly according to claim 1, wherein the first portion (P1) of the wrap-around restricting member (200A; 200B) being formed as a belt (204) extends across the lateral airbag (101A; 101B).

3. The seat-mounted airbag assembly according to any of claims 1 or 2, wherein the second portion (P2) of the wrap-around restricting member (200A; 200B) being formed as a cord (205) connects to the tensioning device (300).

4. The seat-mounted airbag assembly according to any of the preceding claims, wherein the first longitudinal portion (P1) of the wrap-around restricting member (200A; 200B) connects to the second longitudinal portion (P2) of the wrap-around restricting member (200A; 200B) in a joint (206), said joint being displaced in view of the guide bracket (400A; 400B).

5. The seat-mounted airbag assembly according to any of the preceding claims, wherein the belt (204) and the cord (205) are joined together by way of sewing, adhesive, welding or riveting, or a combination thereof.

6. The seat-mounted airbag assembly according to any of the preceding claims, wherein the guide bracket (400A; 400B) is pivotably connected to the vehicle seat (1).

7. The seat-mounted airbag assembly according to claim 6, wherein a pivot axis (PA2) of the guide bracket (400A; 400B) coincides with a pivot axis (PA1) of a rear seat pan cross member (500) that pivotably connects a seat back (3) and a seat pan (5) of the vehicle seat (1).

8. The seat-mounted airbag assembly according to any of the preceding claims, wherein the guide bracket (400A; 400B) comprises a groove (404) and wherein the wrap-around restricting member (200A; 200B) is configured to be received in said groove by means of a snap-fit.

9. The seat-mounted airbag assembly according to any of the preceding claims, wherein the actuation of the tensioning device (300) is configured to be coordinated with an inflation of the lateral airbag (101A; 101B).

10. A vehicle seat, wherein a first seat-mounted airbag assembly (1000A) according to any of claims 1-9 is arranged on a first lateral side of the vehicle seat (1), and a second seat-mounted airbag assembly (1000B) according to any of claims 1-9 is arranged on a second lateral side of the vehicle seat (1).

11. The vehicle seat according to claim 10, wherein the wrap-around restricting member (200A) of the first seat-mounted airbag assembly (1000A) and the wrap-around restricting member (200B) of the second seat-mounted airbag assembly (1000B) connect to a common tensioning device (300).
